(19) Europäisches Patentamt / European Patent Office / Office européen des brevets

(11) **EP 2 404 666 A1**

(12) **DEMANDE DE BREVET EUROPEEN**

(43) Date de publication:
**11.01.2012 Bulletin 2012/02**

(51) Int Cl.:
***B01J 19/24*** *(2006.01)*     ***G01N 31/10*** *(2006.01)*

(21) Numéro de dépôt: **10305767.5**

(22) Date de dépôt: **09.07.2010**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**
Etats d'extension désignés:
**BA ME RS**

(71) Demandeur: **Rhodia Opérations**
**93306 Aubervilliers (FR)**

(72) Inventeur: **Pitiot, Pascal**
**69008 Lyon (FR)**

(74) Mandataire: **Blot, Philippe Robert Emile**
**Cabinet Lavoix**
**2, place d'Estienne d'Orves**
**75441 Paris Cedex 09 (FR)**

(54) **Module de transformation continue d'au moins un produit fluide, unité et procédé associés.**

(57) Ce module comporte une enceinte (22), au moins un premier tube (26A) de transformation du produit. Le premier tube (26A) comprend une entrée (52A) d'injection de produit, une région intermédiaire (44A) en forme d'hélice disposée dans l'enceinte, et une sortie (54A) de récupération de produit transformé. Le premier tube (26A) délimite une lumière interne (51) continue de circulation du produit entre l'entrée d'injection (52A) et la sortie de récupération (54A), l'entrée d'injection (52A) et la sortie de récupération (54A) faisant saillie hors de l'enceinte (22).

Dans la région intermédiaire (44A), le rapport du rayon de l'hélice à l'étendue transversale maximale de la lumière interne (51) est compris entre 20 et 100, avantageusement inférieur entre 20 et 70.

FIG.5

EP 2 404 666 A1

**Description**

La présente invention concerne un module de transformation continu d'au moins un produit fluide, du type comprenant :

- une enceinte ;
- au moins un premier tube de transformation du produit, le premier tube comprenant une entrée d'injection de produit, une région intermédiaire en forme d'hélice disposée dans l'enceinte, et une sortie de récupération de produit transformé, le premier tube délimitant une lumière interne continue de circulation du produit entre l'entrée d'injection et la sortie de récupération, l'entrée d'injection et la sortie de récupération faisant saillie hors de l'enceinte.

Un tel module est propre à former par exemple un réacteur destiné à effectuer une réaction chimique sur un produit fluide, tel qu'un liquide homogène ou hétérogène, une dispersion liquide-liquide, gaz-liquide, liquide-solide, gaz-solide ou un fluide supercritique.

Plus généralement, la transformation peut être une transformation physique, notamment thermique pouvant s'accompagner d'une chimie, et/ou une transformation chimique. Elle peut impliquer un ou plusieurs produits liquides, solides ou gazeux.

De façon non limitative, cette transformation peut être une réaction chimique de type classique mettant en oeuvre par exemple au moins un réactif.

Le module et l'unité de transformation associée sont notamment destinés à être utilisés à l'échelle d'un laboratoire pour déterminer des paramètres constitutifs de la transformation, en vue de l'extrapolation de cette transformation à plus grande échelle, et notamment à l'échelle pilote ou industrielle.

Les paramètres de la transformation sont notamment les propriétés d'écoulement, par exemple la perte de charge, la dispersion axiale et radiale, la viscosité, la rhéologie, le coefficient de partage ou d'autres paramètres.

Les paramètres de la transformation sont également de manière non limitative, les cinétiques de réaction chimique en milieu homogène ou hétérogène, les conditions permettant d'obtenir un optimum de rendement pour des réactions chimiques ou des transformations physiques, des enthalpies de réaction ou de transformation, les processus temporels de réactions chimique et physique.

Le module selon l'invention est avantageusement utilisé pour étudier des réactions telles que estérifications, polymérisations en émulsion, polymérisations en masse, polymérisations radicalaires, nitrations, oxydations ménagées, oxydations, hydroxylations, nitrations, fluorations, chlorations, phosgénations, hydrogénations, amonolyses, époxydations, hydrolyses, hydrocyanations, hydrochlorations, sulfonations, sulfonylations, phosphatations, etc...

Ce module est particulièrement avantageux pour la mise en oeuvre de réactions sélectives dans lesquelles il est utile de minimiser une chimie parasite, et pour les réactions à cinétique d'ordre supérieur ou égal à 2 dans lesquelles le temps de séjour et donc le volume du réacteur doit être minimal à production donnée.

Lors du processus de mise au point d'une transformation chimique ou physique, il est connu de réaliser des essais à petite échelle, par exemple dans des réacteurs de type « batch », « semi-batch » ou continu.

Ces essais à petite échelle permettent d'évaluer rapidement l'intérêt et la faisabilité de la transformation, à moindre coût, et avec une sécurité optimale, du fait des faibles quantités de réactifs impliquées.

Une fois les paramètres de transformation optimisés à l'échelle de laboratoire, leur transposition à l'échelle industrielle est parfois difficile.

En premier lieu, les installations industrielles présentent des dimensions et une structure qui diffèrent considérablement des installations de laboratoire. En outre, les conditions de transfert de masse et d'échange thermique sont généralement très différentes en milieu industriel. Dans le cadre des écoulements continus, les dimensions des réacteurs industriels rendent ces écoulements le plus souvent turbulents, mais pas nécessairement, alors qu'ils sont souvent laminaires à l'échelle du laboratoire.

Il est donc souvent nécessaire de procéder à des simulations nombreuses, et à des essais à l'échelle pilote, puis à l'échelle industrielle pour optimiser la mise en oeuvre du procédé de transformation.

Ces étapes d'extrapolation sont coûteuses et retardent la mise au point d'un procédé industriel. En outre, dans certains cas, le procédé extrapolé peut avoir un rendement nettement inférieur à celui qui était attendu initialement au vu des essais de laboratoire, ce qui peut rendre la solution initialement prévue totalement inexploitable ou non rentable.

Les paramètres de la transformation devant être déterminés à l'échelle du laboratoire sont en particulier les propriétés d'écoulement définies plus haut, la sélectivité de la transformation, notamment en présence d'éventuelles chimies parasites, et la conversion maximale pouvant être attendue.

A cet effet, on connaît des réacteurs de laboratoire du type précité, dans lesquels un tube hélicoïdal est disposé dans un bain marie pour effectuer une réaction chimique.

De tels réacteurs ne sont cependant pas satisfaisants. En effet, du fait de l'écoulement laminaire du réactif dans le réacteur, le mélange dans le réacteur n'est pas toujours satisfaisant, ce qui entraîne une distribution des temps de séjour pas forcément maîtrisée, du fait de dispersions axiales et/ou radiales et de l'existence de volumes morts potentiels. Dans le cas où des chimies parasites apparaissent, le produit obtenu en sortie du réacteur n'est pas représentatif de la réaction à optimiser. L'extrapolation à plus grande échelle et l'optimisation de la synthèse s'en trouvent alors compliquées, faussées, voire compromises.

WO 92/07226 décrit par ailleurs un échangeur de chaleur en forme de spirale comportant deux tubes en forme d'hélice imbriqués l'un dans l'autre. Les tubes sont placés au contact l'un de l'autre pour échanger thermiquement avec une grande surface d'échange thermique.

Un but de l'invention est d'obtenir un module de transformation d'au moins un produit liquide facilitant l'extrapolation à plus grande échelle, tout en offrant une grande versatilité d'utilisation.

A cet effet, l'invention a pour objet un module du type précité, caractérisé en ce que dans la région intermédiaire, le rapport du rayon de l'hélice sur l'étendue transversale maximale de la lumière interne est compris entre 20 et 100, avantageusement entre 20 et 70.

Comme on le verra plus bas, le choix de ce rapport entraîne de manière surprenante un caractère piston marqué, tout en évitant de perturber significativement l'écoulement.

Le module selon l'invention peut comprendre l'une ou plusieurs des caractéristiques suivantes, prises isolément ou suivant toutes combinaisons techniquement possibles :

Avantageusement, le rapport du pas de l'hélice sur le rayon de l'hélice est inférieur à 0,1, avantageusement inférieur à 0,08.

Selon l'invention, le volume intérieur total défini par la lumière interne dans la région intermédiaire entre l'entrée d'injection et la sortie de récupération est inférieur avantageusement à 1 litre, avantageusement inférieur à 100 millilitres, l'étendue transversale maximale de la lumière de circulation dans la région intermédiaire étant notamment inférieure à 1 cm.

La combinaison de ces caractéristiques permet d'obtenir un module de transformation dans lequel la circulation des produits liquides dans le tube en vue de leur transformation présente un caractère de type « piston » très marqué.

Ce caractère piston est obtenu par les caractéristiques géométriques du tube, sans disposer d'éléments de mélange à l'intérieur du tube. Le temps de séjour peut également être facilement ajusté tout en maîtrisant le caractère piston de l'écoulement, ce qui permet d'aider à la démonstration de concepts et à l'extrapolation de réactions chimiques qui sont conduites dans le module.

Dans une variante, le module peut comprendre un ensemble de régulation thermique du produit présent dans le premier tube, l'ensemble de régulation thermique comprenant avantageusement un liquide caloporteur disposé dans l'enceinte au contact du premier tube et un moyen de régulation thermique du fluide caloporteur. Ceci permet de réguler de manière précise la température de la transformation, en chauffant ou refroidissant le produit présent dans le tube.

Dans un autre mode de réalisation, le premier tube est isolé thermiquement notamment par un gaz, pour permettre la conduite de transformations adiabatiques.

Dans le cas où les moyens de régulation thermique sont absents ou inactifs, le module peut fonctionner en adiabatique, pour augmenter les possibilités d'exploration des transformations du produit.

Dans une autre variante de l'invention, le module comporte au moins un deuxième tube de transformation, le deuxième tube présentant une entrée d'injection de produit, une région intermédiaire en forme d'hélice disposée dans l'enceinte, et une sortie de récupération de produit, l'entrée d'injection et la sortie de récupération faisant saillie hors de l'enceinte, le rapport du rayon de l'hélice à l'étendue transversale maximale de la lumière interne dans la région intermédiaire étant compris entre 20 et 100, avantageusement compris entre 20 et 70.

La présence d'un premier tube et d'un deuxième tube de transformation de produit permet de conduire des transformations en parallèle dans des conditions distinctes, ou d'augmenter le temps de séjour.

Dans une variante avantageuse, le module comporte un raccord de liaison raccordant la sortie de récupération du premier tube à l'entrée d'injection du deuxième tube, le raccord de liaison délimitant un passage interne de circulation du produit, débouchant en amont dans la lumière interne du premier tube et en aval dans la lumière interne du deuxième tube.

Pour augmenter la modularité du système et offrir des possibilités accrues d'utilisation, le module selon l'invention peut comprendre la caractéristique additionnelle selon laquelle il comporte une entrée auxiliaire d'injection de produit, distincte de l'entrée d'injection de produit dans le premier tube, l'entrée auxiliaire d'injection de produit étant avantageusement située entre la sortie de récupération du premier tube et l'entrée d'injection du deuxième tube.

Cette entrée auxiliaire a pour avantage d'augmenter le champ d'investigation possible des transformations réalisées à l'aide du module selon l'invention, en autorisant l'injection d'un autre produit pouvant intervenir à un stade intermédiaire de la transformation.

Dans une autre variante de l'invention, le module peut comporter une conduite de dérivation d'une partie du produit à transformer, la conduite de dérivation étant piquée en amont de la région intermédiaire sur le premier tube et débouchant en aval du premier tube pour permettre un mélange entre le produit à transformer et un produit transformé ayant transité par le premier tube, la conduite de dérivation étant avantageusement munie d'une pompe de dérivation.

Une telle conduite de dérivation permet de dégrader volontairement et de manière maîtrisée le caractère « piston » offert par les tubes de transformation de produit du module. Il est ainsi possible de varier encore les possibilités d'investigation obtenues à l'aide du module de transformation selon l'invention.

Dans une autre variante, le module comporte au moins un capteur de mesure d'une propriété physique et/ou chimique du produit circulant dans la lumière interne, disposé en aval de l'entrée d'injection. Ceci permet d'évaluer dans quelle mesure la transformation se déroule et de suivre à quel stade de la transformation des phases critiques peuvent se dérouler.

Dans une autre variante, le module comporte un clapet taré à une pression prédéfinie, le clapet étant disposé avantageusement dans le tube de transformation, en aval de la région intermédiaire. Ce clapet permet de modifier significativement les paramètres opératoires, notamment en température et en pression, sans avoir à changer de dispositif pour effectuer les tests. La pression prédéfinie est par exemple légèrement supérieure, avantageusement supérieure à 5%, de la pression de vapeur saturante du milieu circulant dans le tube de transformation à la température de ce milieu.

L'invention a également pour objet une unité de transformation en continu d'au moins un produit fluide, caractérisé en ce qu'elle comporte :

- au moins un premier module tel que défini plus haut ; et
- un ensemble d'injection de produit à transformer raccordé à l'entrée d'injection du premier module ;

Dans une variante, l'unité comporte au moins un deuxième module tel que défini ci-dessus distinct du premier module, au moins la sortie de récupération d'un tube de transformation du premier module étant raccordée à l'entrée d'injection d'un tube de transformation du deuxième module. Cette configuration permet d'augmenter la versatilité du dispositif pour obtenir un dispositif présentant par exemple un temps de résidence plus élevé.

Dans une variante, au moins une sortie de récupération d'un tube de transformation du deuxième module est raccordée à une entrée d'injection d'un tube de transformation du premier module.

L'invention a en outre pour objet un procédé de transformation d'un produit fluide, du type comprenant les étapes suivantes :

- fourniture d'au moins une unité telle que définie ci-dessus ;
- injection d'au moins un produit à transformer à l'entrée d'injection d'un tube de transformation du premier module, et circulation du produit à travers le tube de transformation ;
- transformation physique et/ou chimique du produit à transformer dans la région intermédiaire ; et
- récupération du produit transformé à la sortie de récupération.

Le procédé selon l'invention peut comprendre l'une ou plusieurs des caractéristiques suivantes, prise(s) isolément ou suivant toute(s) combinaison(s) techniquement possible(s) :

- l'écoulement du produit dans la région intermédiaire du tube de transformation est laminaire ; et
- le nombre de réacteurs parfaitement agités équivalents à la région intermédiaire est supérieur à 20, et est avantageusement supérieur à 50.

Ainsi, le caractère « piston » reste marqué, même avec des écoulements laminaires ou intermédiaires présentant un nombre de Reynolds inférieur à 10 000. Cet effet est d'autant plus marqué que le débit de produit injecté diminue.

L'invention a également pour objet un module de transformation continue d'au moins un produit liquide, du type comprenant :

- une enceinte ;
- au moins un premier tube de transformation de produit,
- au moins un deuxième tube de transformation de produit distinct du premier tube, le deuxième tube étant disposé dans l'enceinte en étant totalement à l'écart du premier tube, le premier tube et le deuxième tube comprenant chacun une entrée d'injection de produit, une région intermédiaire en forme d'hélice, et une sortie de récupération de produit transformé,

le premier tube et le deuxième tube délimitant chacun une lumière interne continue de circulation du produit entre l'entrée d'injection et la sortie de récupération, l'entrée d'injection et la sortie de récupération faisant saillie hors de l'enceinte.

Ce module ne comprend pas nécessairement la caractéristique selon laquelle dans la région intermédiaire, le rapport du rayon de l'hélice à l'étendue transversale maximale de la lumière interne est compris entre 20 et 100, avantageusement entre 20 et 70.

Il peut comprendre l'une ou plusieurs des caractéristiques énoncées plus haut, prises isolément ou suivant toutes combinaisons techniquement possibles.

L'invention sera mieux comprise à la lecture de la description qui va suivre, donnée uniquement à titre d'exemple, et faite en se référant aux dessins annexés, sur lesquels :

- la figure 1 est une vue schématique en perspective partielle d'une première unité de transformation comprenant un premier module de transformation selon l'invention ;
- la figure 2 est une vue en coupe suivant un plan axial médian de la figure 1;
- la figure 3 est une vue de dessus du tube de transformation du module représenté sur la figure 2 ;
- la figure 4 est une vue en bout du tube de la figure 3 ;
- la figure 5 est une vue schématique du raccordement de la première unité ;

- la figure 6 est une vue analogue à la figure 5 pour une deuxième unité ;
- la figure 7 est une vue analogue à la figure 5 pour une troisième unité selon l'invention ;
- la figure 8 est une vue analogue à la figure 7 pour une quatrième unité selon l'invention ;
- la figure 9 est un graphe représentant la distribution des temps de séjour observés en sortie d'un module selon l'invention, après injection d'un échelon de produit en entrée ; et
- la figure 10 est un graphe représentant le nombre de réacteurs parfaitement agités qui équivaut à un tube de transformation d'un module selon l'invention, ainsi que les temps de séjour moyen, en fonction du débit.

Dans tout ce qui suit, les termes « amont » et « aval » s'entendent par rapport au sens normal de circulation d'un fluide.

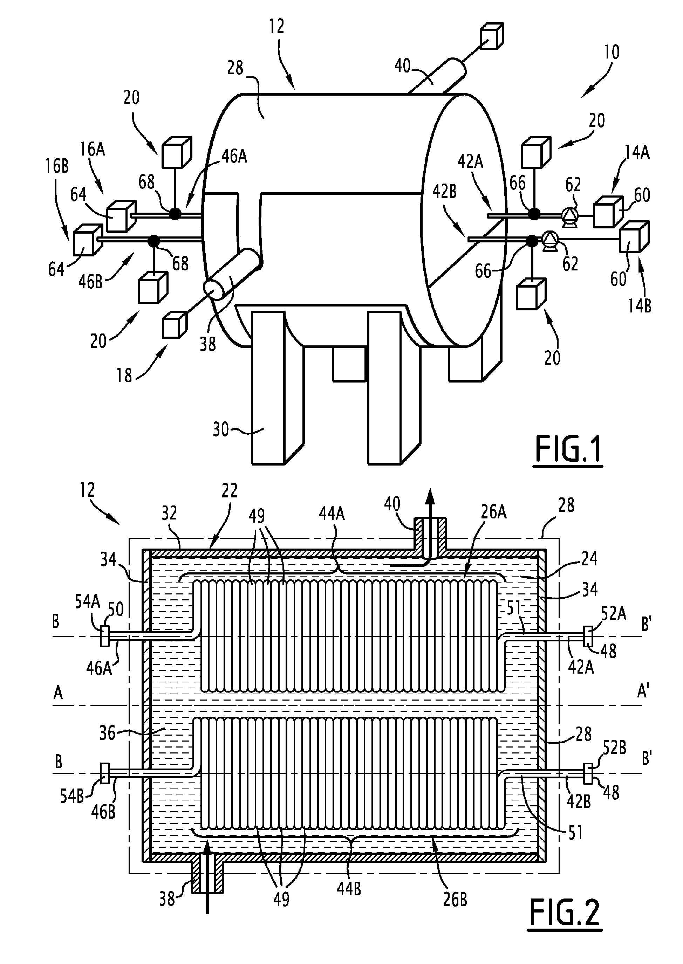

Une première unité de transformation 10 selon l'invention est représentée sur les figures 1 à 5.

Cette unité 10 est destinée à transformer au moins un produit introduit dans l'unité sous forme d'un fluide, tel qu'un liquide homogène ou hétérogène, une dispersion liquide-liquide, gaz-liquide, liquide-solide, gaz-solide ou un fluide supercritique.

Cette transformation est par exemple une transformation physique et/ou une transformation chimique.

La transformation est par exemple une réaction chimique classique mettant en oeuvre par exemple la mise en commun d'électrons, des interactions ou des répulsions physiques, telles que des liaisons hydrogènes, des interactions électrostatiques, des attractions ou répulsions stériques, des affinités pour différents milieux hydrophiles et/ou hydrophobes, des stabilités de formulations, des floculations, ou encore des transferts de phases, par exemple de type liquide/liquide, solide/liquide, ou gaz/liquide, gaz/liquide/solide ou gaz solide.

L'unité 10 est notamment adaptée pour l'étude de la catalyse hétérogène d'une réaction dans laquelle le catalyseur est disposé sous forme d'un lit fixe en étant immobilisé entre des grilles ou des filtres ou est mobile avec le fluide à transformer (« slurry ») ou encore est déposé sur les parois du tube (« washcoat »).

L'unité de transformation 10 est avantageusement une unité de laboratoire destinée à tester la transformation pour optimiser au moins un paramètre de la transformation et pour extrapoler la transformation à plus grande échelle.

Par « unité de laboratoire », on entend avantageusement une unité propre à traiter un débit de produit à transformer inférieur à 10 1/h.

Les paramètres de la transformation sont notamment les propriétés d'écoulement, par exemple la perte de charge, la dispersion axiale et radiale, la viscosité, la rhéologie, le coefficient de partage ou d'autres paramètres.

Les paramètres de la transformation sont également de manière non limitative, les cinétiques de réaction chimique en milieu homogène ou hétérogène, les conditions permettant d'obtenir un optimum de rendement pour des réactions chimiques ou des transformations physiques, des enthalpies de réaction ou de transformation, les processus temporels de réactions chimique et physique.

Comme illustré par la figure 1, l'unité de transformation 10 comporte au moins un module de transformation 12, et de préférence au moins un ensemble d'injection 14A, 14B d'un produit à transformer, et au moins un ensemble 16A, 16B de récupération du produit transformé.

Dans cet exemple, l'unité 10 comporte en outre un ensemble 18 de régulation de la température dans le module de transformation 12 et avantageusement des capteurs 20A, 20B de mesure.

Comme illustré par les figures 1, 2 et 5, le module de transformation 12 comporte une enceinte 22 contenant un fluide caloporteur 24 et au moins un tube hélicoïdal 26A, 26B de transformation, le tube 26A, 26B étant immergé dans le fluide caloporteur 24 de l'enceinte 22.

Dans l'exemple représenté sur la figure 2, le module de transformation 12 comporte en outre optionnellement un manteau calorifuge 28 entourant l'enceinte 22 et un support 30 destiné à porter l'enceinte 22 et le manteau 28, lorsqu'il est présent.

Dans l'exemple représenté sur les figures, l'enceinte 22 est formée par une paroi périphérique 32 d'axe A-A' sensiblement horizontal, obturée par des parois transversales 34 démontables pour permettre un accès au volume intérieur 36 délimité à l'intérieur de l'enceinte 22.

La paroi périphérique 32 est sensiblement cylindrique.

L'enceinte 22 comporte une entrée 38 d'injection de fluide caloporteur 24 dans le volume intérieur 36, et une sortie 40 d'éjection du fluide. L'entrée 38 et la sortie 40 sont avantageusement ménagées transversalement dans la paroi périphérique 32, avec un angle de 90° par rapport à l'axe A-A'.

Lorsque les parois d'extrémité 34 sont montées sur la paroi périphérique 32, le volume intérieur 36 est obturé de manière étanche, à l'exception de l'entrée d'injection 38 de fluide caloporteur et de la sortie d'éjection 40 de fluide caloporteur.

Dans cet exemple, le fluide caloporteur 24 est un liquide, par exemple de l'eau ou de l'huile. Il remplit sensiblement totalement le volume intérieur 36.

Le module 12 représenté sur les figures 1 à 5 comporte une pluralité de tubes hélicoïdaux 26A, 26B reçus dans la même enceinte 22.

Avantageusement, le module 12 comporte deux tubes 26A, 26B disposés en parallèle dans l'enceinte 22.

Dans cet exemple, les tubes 26A, 26B sont disposés horizontalement dans l'enceinte 22. Ils s'étendent ainsi respectivement suivant des axes B-B' horizontaux parallèles à l'axe A-A'. Les tubes 26A, 26B sont disposés totalement à l'écart l'un de l'autre.

En variante, au moins un tube 26A, 26B s'étend suivant un axe B-B' vertical ou incliné d'un angle non nul inférieur à 90° par rapport à un axe vertical. Avantageusement, les deux tubes 26A , 26B s'étendent suivant des axes B-B' parallèles, verticaux ou inclinés.

Comme illustré par la figure 2, chaque tube 26A, 26B comporte un tronçon d'entrée 42A, 42B, une région intermédiaire 44A, 44B en forme d'hélice, et un tronçon de sortie 46A, 46B.

Le tronçon d'entrée 42A, 42B fait saillie hors de l'enceinte 22 à travers une première paroi d'extrémité 34. Il s'étend avantageusement linéairement le long de l'axe B-B' ou parallèlement à l'axe B-B'. Il présente un connecteur 48 d'entrée à son extrémité amont.

Le tronçon de sortie 46A, 46B fait également saillie à travers une deuxième paroi d'extrémité 34 opposée à la première paroi d'extrémité 34. Il s'étend linéairement le long de l'axe B-B' ou parallèlement à cet axe. Il présente un connecteur de sortie 50.

Le tronçon intermédiaire 44A, 44B est enroulé suivant une hélice d'axe B-B'. Le tronçon intermédiaire 44A, 44B présente ainsi une pluralité de spires 50 sensiblement jointives, de contour circulaire, centrées sur l'axe B-B'.

Le tube de transformation 26A, 26B délimite intérieurement une lumière continue 51 de circulation du produit à transformer s'étendant entre une entrée 52A, 52B d'injection de produit à transformer située à l'extrémité libre du tronçon d'entrée 42A, 42B, et une sortie 54A, 54B de récupération de produit transformé située à l'extrémité libre du tronçon de sortie 46A, 46B.

Le tube 26A, 26B est avantageusement réalisé d'un seul tenant en un matériau conducteur de la chaleur tel qu'un métal, présentant une tenue élevée à la pression et à la température.

Le tube 26A, 26B est par exemple réalisé en alliage à base de molybdène, chrome, cobalt, fer, cuivre, manganèse, titane, zirconium, aluminium, carbone et tungstène vendu sous les marques commerciales HASTELLOY® ou d'un alliage de nickel, chrome, fer, manganèse comprenant du cuivre et du molybdène commercialisé sous la dénomination INCONEL® et plus particulièrement des alliages HASTELLOY C276 ou INCONEL 600, 625, ou 718.

En variante, le tube 26A, 26B est réalisé en acier inoxydable, par exemple en acier austénitique tel que décrit dans l'ouvrage « Perry's Chemical Engenieers Handbook », 6th Edition, 1984 (p. 23 à 44) de Robert H Perry et al. En particulier, les aciers inoxydables de type 304, 304L, 316 ou 316L peuvent être utilisés.

En variante, le tube 26A, 26B est réalisé en verre ou en polymère, notamment en polytétrafluoroéthylène ou Téflon®. Dans ce cas, le tube peut être transparent à la lumière visible, UV ou infrarouge, ce qui permet de conduire des réactions photochimiques. Cela permet aussi de visualiser la transformation, de procéder à de l'analyse spectroscopique, utiliser des énergies alternatives telles que microondes, ultrasons.

En variante encore, le tube 26A, 26B est réalisé en céramique.

Dans l'exemple représenté sur la Figure 1, le tube 26A, 26B est propre à permettre un échange thermique direct et sans contact entre le fluide caloporteur 24 présent dans le volume intérieur 36 et le produit à transformer circulant dans la lumière 51.

Selon l'invention, le tube 26A, 26B est configuré pour que l'écoulement d'un fluide laminaire à travers la lumière 51 présente un caractère de type « piston » qui sera décrit en détail plus bas.

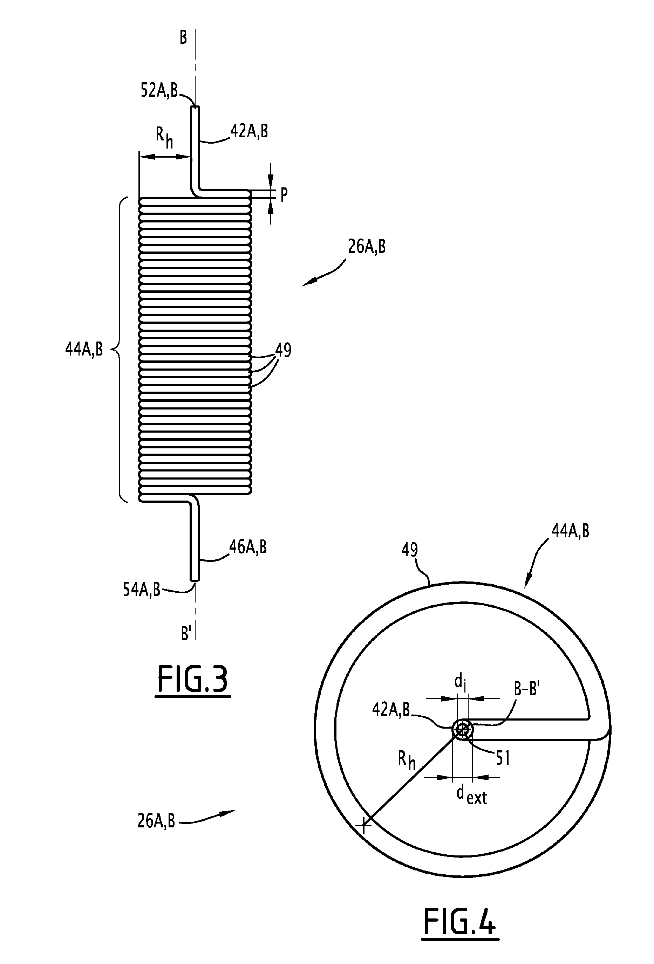

A cet effet, en référence à la figure 4, le rapport p1 du rayon $R_h$ de l'hélice engendrée par la partie intermédiaire 44A, 44B du tube 26A, 26B, sur l'étendue transversale maximale de la lumière interne 44, correspondant à son diamètre interne $d_i$, est inférieur à 100, avantageusement inférieur à 70, et notamment compris entre 20 et 100 ou entre 20 et 70.

Ce rapport $\rho_1$ est de préférence supérieur à 20. Il est par exemple compris entre 30 et 40, ou entre 65 et 75.

Le rayon $R_h$ de l'hélice est supérieur à 10 mm, et est avantageusement inférieur à 100 mm, pour être notamment compris entre 30 mm et 60 mm.

Le diamètre interne di est généralement inférieur à 10 mm et est avantageusement supérieur à 0,1 mm, pour être compris entre 0,5 mm et 4 mm, avantageusement entre 1 mm et 3 mm.

Le rapport $P_2$ du pas P de l'hélice engendrée par le tronçon intermédiaire 44A, 44B sur le rayon $R_h$ de l'hélice est par ailleurs inférieur à 0,1 et est avantageusement supérieur à 0,01.

Ce rapport $P_2$ est avantageusement inférieur à 0,08 et est notamment compris entre 0,02 et 0,08. Ce rapport est notamment compris entre 0,05 et 0,07 et entre 0,02 et 0,04.

Le volume intérieur $V_{total}$ défini par la lumière 51, pris entre l'entrée 52A, 52B et la sortie 54A, 54B, est inférieur à un litre, avantageusement inférieur à 100 ml et notamment supérieur à 1 ml.

Ce volume est notamment compris entre 2 ml et 70 ml, et notamment entre 2 ml et 20 ml, et entre 40 ml et 60 ml.

La longueur totale L du tube 26A, 26B, prise linéairement le long du tube 26A, 26B est avantageusement supérieure à 1 mètre et est notamment inférieure à 200 mètres, avantageusement à 50 mètres.

Cette longueur est par exemple comprise entre 2 mètres et 20 mètres et notamment entre 2 mètres et 5 mètres et entre 6 mètres et 12 mètres.

Le nombre de spires $N_s$ dépend de la longueur totale du tube 26A, 26B. Il est ainsi supérieur à 1, avantageusement supérieur à 10.

Lorsqu'il est présent, le manteau calorifuge 28 enveloppe sensiblement la totalité de la surface extérieure de l'enceinte 22, à l'exception de l'entrée d'injection 38 et de la sortie d'éjection 40.

Le support 30 est disposé sous l'enceinte 22.

Chaque ensemble d'injection 14A, 14B comporte au moins un réservoir 60 de produit à transformer, et au moins une pompe 62 raccordée en amont au réservoir 60 et en aval à l'entrée d'injection 52A, 52B. Si plusieurs produits à transformer sont injectés simultanément, l'ensemble 14A, 14B comprend un mélangeur disposé en amont de l'entrée 52A, 52B et en aval de la ou de chaque pompe 62.

La pompe 62 est propre à prélever du produit à transformer dans le réservoir 60 et à l'amener vers la lumière 51 pour le faire circuler dans la lumière 51 jusqu'à la sortie 54A, 54B, à un débit réglable.

Chaque ensemble de récupération 16A, 16B comporte un réceptacle 64 de récupération.

L'ensemble de régulation 18 est raccordé à l'entrée d'injection de fluide caloporteur 38 et à la sortie d'éjection de fluide caloporteur 40 pour faire circuler le fluide caloporteur 24 à une température choisie à travers le volume intérieur 36, à contre courant du fluide à transformer circulant dans les tubes 26A, 26B.

Lorsque le fluide caloporteur 24 doit être chauffé, l'ensemble de régulation 18 comporte avantageusement des moyens de chauffage du fluide caloporteur 24.

Les capteurs 20A, 20B lorsqu'ils sont présents, comprennent par exemple un capteur 64 de mesure de la température du produit à transformer, un capteur 68 de détection de la quantité de produit transformé. Ils peuvent comprendre, en variante, un capteur de mesure de la perte de charge.

Le capteur de température 64 est par exemple piqué sur le tronçon d'entrée 42A, 42B à l'extérieur de l'enceinte 22. Le capteur de détection 68 est par exemple piqué sur le tronçon de sortie 46A, 46B à l'extérieur de l'enceinte 22.

Dans l'exemple représenté sur la figure 1, l'unité de transformation 10 comporte un module de transformation 12 unique comportant deux tubes de transformation 26A, 26B parallèles. Chaque tube 26A, 26B est raccordé à un ensemble d'injection 14A, 14B distinct et un ensemble de récupération 16A, 16B respectif.

Pour la mise en oeuvre d'un procédé de transformation selon l'invention, la pompe 62 de chaque ensemble d'injection 14A, 14B est activée pour faire circuler du produit destiné à être transformé à partir du réservoir 60 vers une entrée 52A, 52B respective.

Le produit circule alors dans le tronçon d'entrée 42A et 42B et pénètre dans l'enceinte 22 pour circuler successivement dans le tronçon intermédiaire 44A, 44B, puis sort de l'enceinte 22 dans le tronçon de sortie 46A, 46B.

Dans un premier mode de fonctionnement, la température du fluide caloporteur est régulée à une température de transformation donnée, par l'intermédiaire de l'ensemble de régulation 18. Le produit transformé est alors extrait à travers la sortie 50 et récupéré dans le réceptacle 64.

Le produit circulant dans la lumière 51 forme avantageusement un écoulement laminaire ou intermédiaire caractérisé par un nombre de Reynolds Re inférieur à 10 000.

Malgré cet écoulement laminaire ou intermédiaire, et compte tendu des dimensions particulières du tube hélicoïdal 26A, 26B, il est possible d'obtenir un effet hydrodynamique de type « piston » à caractère variable et maîtrisable. A cet effet, le nombre J de réacteurs parfaitement agités (RPA) équivalent à chaque tube 26A, 26B est supérieur à 20, et est notamment supérieur à 50. Ce résultat est obtenu avantageusement pour des débits compris entre 0,1 ml/minute et 50 ml/minute.

De manière très avantageuse, le nombre J et donc le caractère « piston » de l'écoulement du produit augmente lorsque le débit de produit diminue. Ceci permet également de diminuer notablement les volumes morts.

Le débit des pompes 60 est avantageusement réglé pour obtenir un temps de séjour dans chaque tube 26A, 26B compris entre 5 secondes et 4 heures.

La perte de charge à travers chaque tube 26A, 26B est assez faible et dépend classiquement de la viscosité et de la rhéologie du fluide traversant le tube 26A, 26B, et est par exemple comprise entre 20 millibars et 2 bars, pour de l'eau à température ambiante à différents débits.

Le nombre J de réacteurs parfaitement agités équivalents et le temps $\tau_i$ de passage par réacteur parfaitement agité sont calculés par estimation d'un bilan sur chaque réacteur équivalent de rang i par l'équation :

$$C(i-1,t) = C(i,t) + \tau_i dC(i,t)/dt$$

où C(i,t)est la concentration en indicateur coloré dans le réacteur i à l'instant t.

La concentration C(entrée, t) d'un indicateur coloré injecté par l'ensemble 14A, 14B est mesurée en fonction du temps t à une fréquence donnée sur un intervalle de temps choisi, de l'ordre de 1 à 10 fois le temps de passage dans le tube.

La concentration C(sortie, t) de l'indicateur coloré récupéré à la sortie 54A, 54B en fonction du temps est mesurée sur l'intervalle de temps choisi à la même fréquence.

Puis, le paramètre J et le paramètre $\tau_i$ sont ajustés en propageant le signal C(entrée,t) dans tous les réacteurs élémentaires jusqu'à ce que la concentration calculée C(J,t) soit le plus proche possible de C(sortie,t) sur l'ensemble des temps de mesure dans l'intervalle de temps choisi, à l'aide d'une méthode de convergence mathématique, par exemple par une régression des moindres carrés.

Il est observé que l'écart entre le modèle et les résultats expérimentaux est d'autant plus faible que le diamètre interne du tube 26A, 26B est faible et que la vitesse est basse.

L'unité 10 représentée sur la figure 1, permet de tester plusieurs conditions opératoires de débits en parallèle, en ajustant par exemple le débit des pompes 62 de chaque ensemble d'injection 14A, 14B, en utilisant le même produit de départ dans les ensembles d'injection 14A, 14B, ou en modifiant la longueur des tubes 26A, 26B ou au contraire des produits de départ distincts dans chaque ensemble 14A, 14B.

La présence de deux tubes 26A, 26B disposés en parallèle autorise une grande versatilité d'utilisation des modules 12.

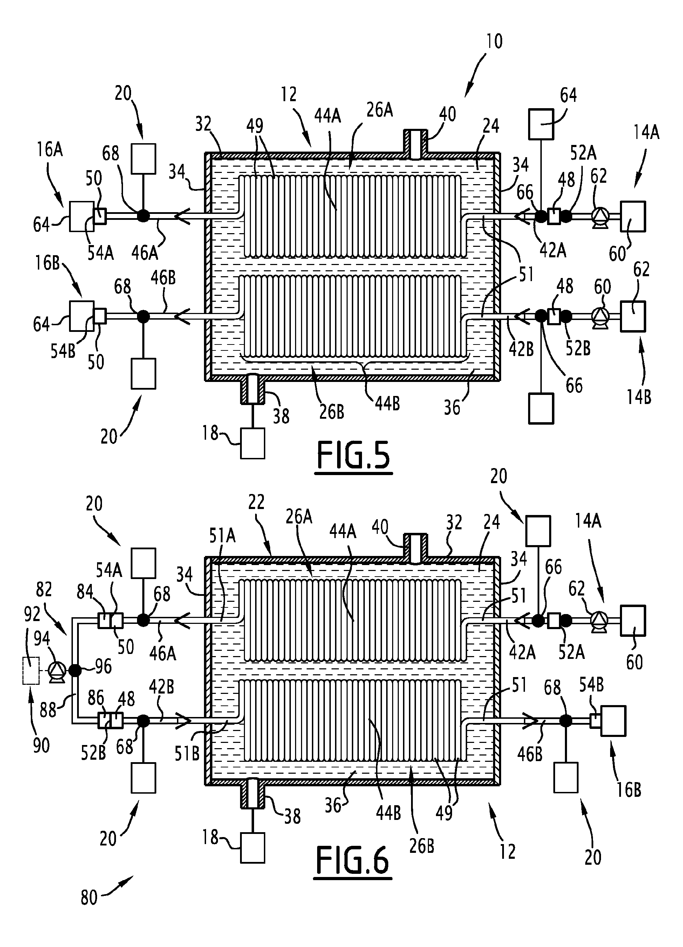

Ainsi, la figure 6 illustre une deuxième unité 80 de transformation selon l'invention. A la différence de la première unité 10, la tubulure d'entrée 42B du deuxième tube 26B est située du même côté que la tubulure de sortie 46A du premier tube 26A.

La deuxième unité 80 comporte en outre un raccord de liaison 82 raccordant la sortie 54A du premier tube 26A à l'entrée 52B du deuxième tube 26B. Le raccord 82 comporte un connecteur d'entrée 84 monté sur le connecteur de sortie 50 du premier tube 26A et un connecteur de sortie 86 monté sur le connecteur d'entrée 48 du deuxième tube 26B.

Le raccord 82 présente une lumière de liaison 88 débouchant, en amont, dans la lumière interne 51 du premier tube 26A, et en aval, dans la lumière interne 51 du deuxième tube 26B.

Ainsi, un chemin fluidique continu est établi entre l'ensemble d'injection 14A, la lumière interne 51 du premier tube 26A, la lumière de liaison 88 et la lumière interne 51 du deuxième tube 26B.

Cette disposition augmente le temps de résidence du produit à transformer dans l'enceinte 22.

Dans une variante, la deuxième unité 80 comporte en outre un ensemble auxiliaire d'injection 90 d'un produit auxiliaire. L'ensemble auxiliaire 90 comprend un réservoir 92 de produit auxiliaire liquide et une pompe 94, dont la sortie est raccordée à un point de piquage 96 débouchant dans le raccord 82. Le produit auxiliaire est avantageusement liquide.

Il est ainsi possible d'effectuer une première transformation à travers le tube 26A à l'aide du produit de départ, puis d'ajouter un produit auxiliaire dans le produit partiellement transformé à la sortie du premier tube 26A. Le mélange formé par le produit auxiliaire et par le produit partiellement transformé est ensuite injecté dans le deuxième tube 26B pour former le produit transformé à la sortie du deuxième tube 26B.

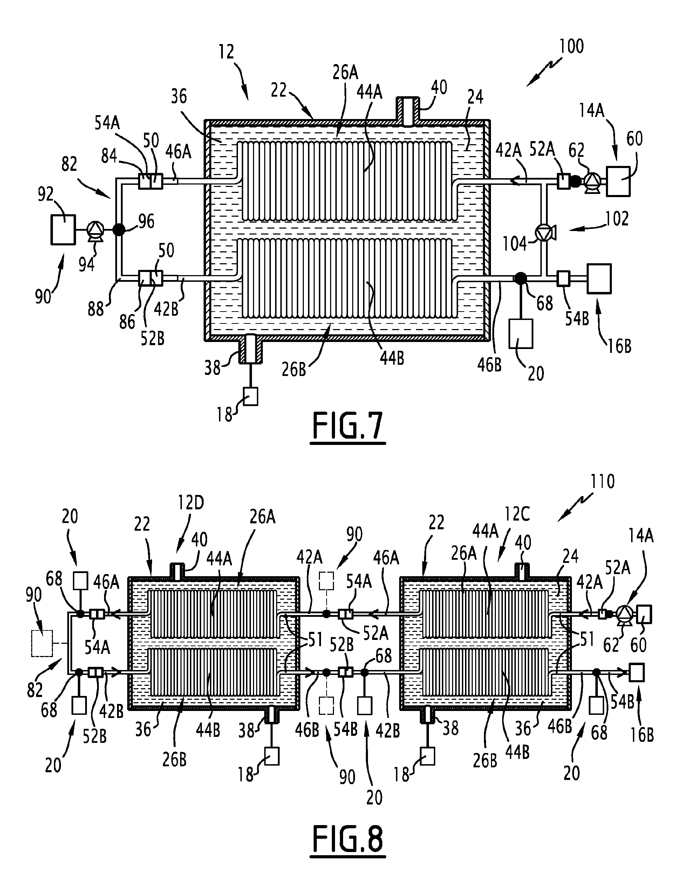

Une troisième unité 100 de transformation selon l'invention est représentée sur la figure 7. A la différence de la deuxième unité 80, la troisième unité 100 comporte un piquage de dérivation 102 raccordant le tronçon d'entrée 42A du premier tube 26A au tronçon de sortie du deuxième tube 26B.

Le piquage de dérivation 102 est muni d'une pompe 104 à débit réglable. Il est ainsi possible de dériver une fraction volumique comprise entre 0 % et 100% du produit à transformer directement dans le tronçon de sortie 26B, sans passer par l'enceinte 22. Une telle configuration permet de dégrader volontairement le caractère « piston » du module de transformation 12. Ceci permet par exemple de déterminer quelle est l'exigence en caractère « piston » d'une chimie donnée. Par suite, il est possible de dimensionner le réacteur pilote ou industriel au juste nécessaire d'un point de vue hydrodynamique afin de minimiser l'investissement et les coûts proportionnels tout en assurant des performances chimiques élevées.

Une quatrième unité 110 selon l'invention est représentée sur la figure 8. A la différence de la première unité 10, la quatrième unité 110 comporte une pluralité de modules 12C, 12D montés en série.

En variante, ce nombre peut être supérieur à 2. Dans cet exemple, le nombre de modules 12C, 12D est égal à 2.

Le tronçon de sortie 46A du premier tube 26A du premier module 12C est raccordé au tronçon d'entrée 42A du premier tube 26A du deuxième module 12D. De même, le tronçon de sortie 46B du deuxième tube 26B du deuxième module 12D est raccordé au tronçon d'entrée 42B du deuxième tube 26B du premier module 12C.

Le deuxième module 12D est muni d'un raccord 82 de liaison du premier tube 26A au deuxième tube 26B, de structure analogue à celui décrit précédemment pour la deuxième unité 80. Ainsi, le raccord 82 relie hydrauliquement le tronçon de sortie 46A du premier tube 26A du deuxième module 12D et le tronçon d'entrée 42B du deuxième tube 26C du deuxième module 12D.

Ainsi, un chemin fluidique continu peut être établi pour le produit à transformer entre l'ensemble d'injection 14A, le premier tube 26A du premier module 12C, le premier tube 26A du deuxième module 12D, le raccord de liaison 82, le deuxième tube 26B du deuxième module 12D, le deuxième tube 26B du premier module 12C et l'ensemble de récupération 16A.

Le temps de séjour du produit à transformer dans les enceintes successives 22 est donc augmenté. Par ailleurs, il est possible de faire subir différents traitements thermiques au produit à transformer, par exemple en le soumettant à des températures différentes dans les enceintes successives 22.

Dans une variante, la quatrième unité 110 comprend une pluralité d'ensembles d'injection auxiliaire 90 tels que décrits plus haut, piqués respectivement sur le raccord de liaison 82 et/ou sur l'une des tubulures de liaison entre les modules 12C, 12D formées respectivement par la tubulure de sortie 46A du premier tube 26A du premier module 12C associée à la tubulure 42A d'entrée du premier tube 26A du deuxième module 12C ou formée par la tubulure de sortie 46B du deuxième tube 26B du deuxième module 12D associée à la tubulure d'entrée 42B du deuxième tube 26B du premier module 12C.

Il est donc possible de faire varier de manière sensible les conditions opératoires, en réglant les températures respectives des enceintes 22, et la nature et le débit des produits auxiliaires ajoutés par les ensembles d'injection auxiliaires 90. En outre, des capteurs de température 66 et de détection 68 peuvent être placés à divers points sur les tubulures de liaison ou sur le raccord 82 pour étudier de manière précise les conditions de la transformation.

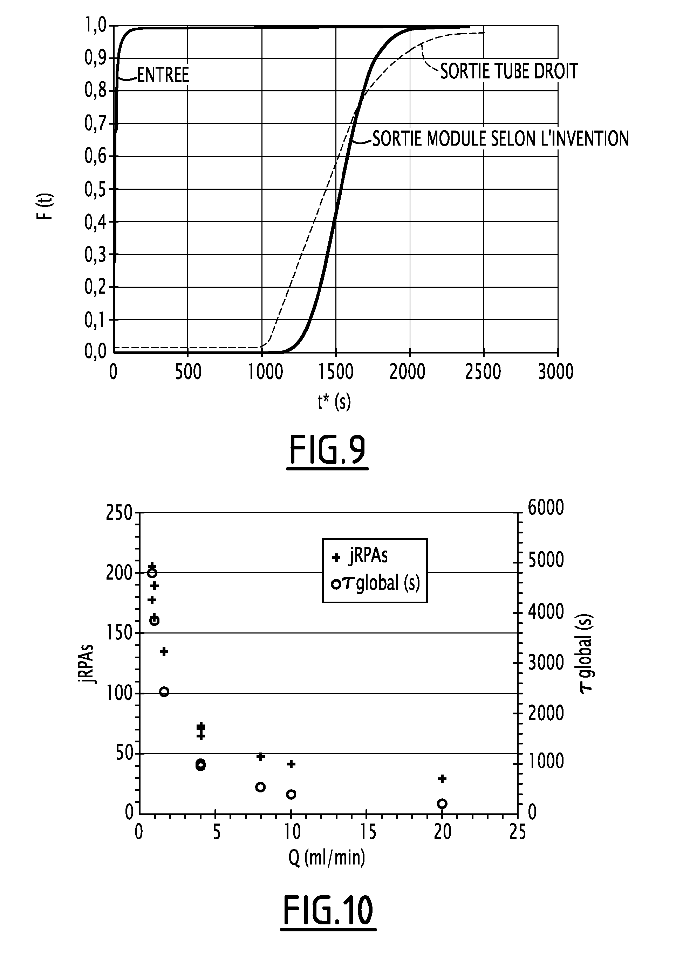

Le caractère « piston » de chaque tube 26A, 26B de chaque module 12 est illustré par la distribution des temps de séjour en fonction du temps représentée sur la figure 9, pour un indicateur coloré injecté en entrée sous forme d'un échelon de concentration.

Le nombre de réacteurs parfaitement agités équivalents J pour différents débits et le temps de séjour moyen $\tau_i$ dans chaque réacteur sont représentés en fonction du débit sur la figure 9. Comme on peut le voir sur ces figures, la dispersion est minimale suite à l'injection en entrée d'un échelon de produit. Cette dispersion est très inférieure à celle observée pour un tube linéaire de longueur analogue.

Le nombre de réacteurs équivalents est au moins supérieur à 20, voire supérieur à 100 lorsque le débit diminue.

Dans une variante de la première unité 10, de la deuxième unité 80, de la troisième unité 100, et de la quatrième unité 110, les transformations sont effectuées de manière adiabatique.

Dans ce cas, les tubes 26A, 26B ne sont pas nécessairement plongés dans un liquide mais peuvent être placés dans un volume de gaz.

Ainsi, chaque tube de transformation 26A, 26B est par exemple plongé dans un fluide susceptible d'être un isolant thermique par rapport au tube 26A, 26B.

Ce fluide est par exemple un gaz tel que l'air ambiant.

Dans ce cas, l'unité 10 est dépourvue de moyens de régulation de la température dans chaque tube 26A, 26B.

Lors de la mise en oeuvre du procédé selon l'invention, le produit à transformer circulant dans chaque tube 26A, 26B évolue de manière adiabatique, sans chauffage, ni refroidissement extérieur.

L'enceinte 22 est dans ce cas avantageusement couverte du manteau calorifuge 28 décrit plus haut.

Dans une autre variante, l'ensemble de régulation 18 comporte des moyens de chauffage du tube 26A, 26B dépourvus de liquide caloporteur 24.

A cet effet, l'ensemble de régulation thermique reste propre à chauffer le produit présent dans le tube 26A, 26B sur toute la périphérie du tube 26A, 26B.

Ces moyens de chauffage sont par exemple des moyens de chauffage dans la masse tels qu'une source micro-ondes, ou des moyens de chauffage du tube, tels que des moyens de chauffage par induction, des moyens de chauffage par air chaud, des moyens de chauffage par rayonnement infrarouge ou d'autres moyens de chauffage.

Dans une variante, l'ensemble de régulation thermique comporte en outre des moyens de refroidissement.

Dans une autre variante, le nombre de tubes 26A, 26B dans l'enceinte est supérieur à 2.

Dans encore une autre variante, un clapet taré à une pression prédéfinie avantageusement supérieure à la pression atmosphérique est placé à la sortie d'un tube hélicoïdal. La pression prédéfinie est par exemple choisie pour être légèrement supérieure, par exemple au moins 5% supérieure à la pression de vapeur saturante du milieu réactionnel circulant dans le tube à la température de réaction à laquelle est soumis le milieu réactionnel.

Ceci permet de varier significativement notamment la température de transformation qui peut être testée dans un module selon l'invention, sans avoir à changer d'unité pour tester ces variations, notamment lorsque certains composés sont susceptibles d'entrer en ébullition à la température testée. Ainsi, il est possible de déterminer très facilement et rapidement si des conditions opératoires modifiées permettent d'augmenter la sélectivité et/ou la conversion.

Les dimensions de la lumière de circulation, et notamment le faible diamètre du tube en forme d'hélice garantit un rapport S/V entre la surface interne S délimitée par le tube et le volume V de la lumière de circulation compris entre 400 $m^{-1}$ et 4000 $m^{-1}$, avantageusement entre 500 $m^{-1}$ et 3000 $m^{-1}$.

Ceci est favorable à un bon échange thermique à travers le tube. En outre, ceci permet de mettre en évidence une éventuelle catalyse de paroi, notamment lorsque le tube est réalisé à base d'un matériau métallique. Cette catalyse de paroi peut être mise en évidence de manière beaucoup plus simple que dans un réacteur agité classique, et sans perturbation de l'hydrodynamique du milieu réactionnel, ni d'introduction d'un matériau dispersé ou d'un insert dans le milieu réactionnel.

## Revendications

1. Module (12) de transformation continue d'au moins un produit fluide, du type comprenant :

    - une enceinte (22) ;
    - au moins un premier tube (26A) de transformation du produit, le premier tube (26A) comprenant une entrée (52A) d'injection de produit, une région intermédiaire (44A) en forme d'hélice disposée dans l'enceinte, et une sortie (54A) de récupération de produit transformé, le premier tube (26A) délimitant une lumière interne (51) continue de circulation du produit entre l'entrée d'injection (52A) et la sortie de récupération (54A), l'entrée d'injection (52A) et la sortie de récupération (54A) faisant saillie hors de l'enceinte (22) ;

**caractérisé en ce que**, dans la région intermédiaire (44A), le rapport du rayon ($R_h$) de l'hélice sur l'étendue transversale maximale (di) de la lumière interne (51) est compris entre 20 et 100, avantageusement entre 20 et 70.

2. Module (12) selon l'une quelconque des revendications précédentes, **caractérisé en ce que** le rapport du pas (P) de l'hélice, sur le rayon ($R_h$) de l'hélice est inférieur à 0,1, avantageusement inférieur à 0,08.

3. Module (12) selon l'une quelconque des revendications précédentes, **caractérisé en ce que** le volume intérieur total défini par la lumière interne (51) dans la région intermédiaire entre l'entrée d'injection (52A) et la sortie de récupération (54A) est inférieur à 1 litre, avantageusement inférieur à 100 millilitres, l'étendue transversale maximale (di) de la lumière de circulation (51) dans la région intermédiaire (44A) étant notamment inférieure à 1 cm.

4. Module (12) selon l'une quelconque des revendications précédentes, **caractérisé en ce qu'**il comprend un ensemble (18) de régulation thermique du produit présent dans le premier tube (26A), l'ensemble (18) de régulation thermique comprenant avantageusement un liquide caloporteur (24) disposé dans l'enceinte (22) au contact du premier tube (26A) et un moyen de régulation thermique du fluide caloporteur (24).

5. Module (12) selon l'une quelconque des revendications 1 à 3, **caractérisé en ce que** le premier tube (26A) est isolé thermiquement, notamment par un gaz pour permettre la conduite de transformations adiabatiques.

6. Module (12) selon l'une quelconque des revendications précédentes, **caractérisé en ce qu'**il comporte au moins un deuxième tube (26B) de transformation, le deuxième tube (26B) présentant une entrée (52B) d'injection de produit, une région intermédiaire (44B) en forme d'hélice disposée dans l'enceinte et une sortie (54B) de récupération de produit, l'entrée d'injection (52B) et la sortie de récupération (54B) faisant saillie hors de l'enceinte (22), le rapport du rayon ($R_h$) de l'hélice sur l'étendue transversale maximale de la lumière interne (51) dans la région intermédiaire (44B) compris entre 20 et 100, avantageusement entre 20 et 70.

7. Module (12) selon la revendication 6, **caractérisé en ce qu'**il comporte un raccord de liaison (82) raccordant la sortie de récupération (54A) du premier tube (26A) à l'entrée d'injection (52B) du deuxième tube (26B), le raccord de liaison (82) délimitant un passage interne de circulation de produit débouchant, en amont, dans la lumière interne (51) du premier tube (26A) et en aval, dans la lumière interne (51) du deuxième tube (26B).

8. Module (12) selon la revendication 7, **caractérisé en ce qu'**il comporte une entrée auxiliaire (90) d'injection de produit, distincte de l'entrée (52A) d'injection de produit dans le premier tube (26A), l'entrée auxiliaire (90) d'injection de produit, étant avantageusement située entre la sortie de récupération du premier tube (26A) et l'entrée d'injection du deuxième tube (26B).

9. Module (12) selon l'une quelconque des revendications précédentes, **caractérisé en ce qu'**il comporte une conduite de dérivation (102) d'une partie du produit à transformer, la conduite de dérivation (102) étant piquée en amont de la région intermédiaire (44A) sur le premier tube (26A), et débouchant en aval du premier tube (26A) pour permettre un mélange entre le produit à transformer et un produit transformé ayant transité par le premier tube (26A), la conduite de dérivation (102) étant avantageusement munie d'une pompe de dérivation.

10. Unité (10 ; 80 ; 100 ; 110) de transformation en continu d'au moins un produit fluide, **caractérisé en ce qu'**elle comporte :

    - au moins un premier module (12 ; 12C) selon l'une quelconque des revendications précédentes ;
    - un ensemble (14A, 14B) d'injection de produit à transformer raccordé à l'entrée d'injection (52A) du premier module (12 ; 12C).

11. Unité (110) selon la revendication 10, **caractérisée en ce qu'**elle comporte au moins un deuxième module (12D) selon l'une quelconque des revendications 1 à 9, distinct du premier module (12C), au moins la sortie de récupération (54A) d'un tube de transformation (26A) du premier module (12C) étant raccordée à l'entrée d'injection (52A) d'un tube de transformation (26A) du deuxième module (12D).

12. Unité (110) selon la revendication 11, **caractérisée en ce qu'**au moins une sortie de récupération (54B) d'un tube de transformation (26B) du deuxième module (12D) est raccordée à une entrée d'injection (52B) d'un tube de transformation (26B) du premier module (12C).

13. Procédé de transformation d'un produit fluide, du type comprenant les étapes suivantes :

    - fourniture d'au moins une unité (10 ; 80 ; 100 ; 110) selon l'une quelconque des revendications 10 à 12 ;

- injection d'au moins un produit à transformer à l'entrée d'injection (52A) d'un tube de transformation (24A) du premier module (12 ; 12C), et circulation du produit à travers le tube de transformation (24A) ;
- transformation physique et/ou chimique du produit à transformer dans la région intermédiaire (44A) ;
- récupération du produit transformé à la sortie de récupération (54A).

**14.** Procédé selon la revendication 13, **caractérisé en ce que** l'écoulement du produit dans la région intermédiaire (44A) du tube de transformation (24A) est laminaire ou intermédiaire.

**15.** Procédé selon la revendication 14, **caractérisé en ce que** le nombre de réacteurs parfaitement agités équivalents à la région intermédiaire (44A) est supérieur à 20, et est avantageusement supérieur à 50.

FIG.1

FIG.2

FIG.3

FIG.4

FIG.5

FIG.6

FIG.7

FIG.8

FIG.9

FIG.10

**Europäisches Patentamt**

**European Patent Office**

**Office européen des brevets**

# RAPPORT DE RECHERCHE EUROPEENNE

Numéro de la demande

EP 10 30 5767

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2009/151322 A1 (TNO [NL]; VAN DE RUNSTRAAT ANNEMIEKE [NL]; GEERDINK PETER [NL]; GOETHE) 17 décembre 2009 (2009-12-17) * abrégé * * page 4, ligne 10 - ligne 21 * * page 5, ligne 19 - page 6, ligne 2; figures 1, 2 * * revendications 2, 4, 5 * ----- | 1-15 | INV. B01J19/24 G01N31/10 |
| X | WO 01/36514 A1 (BASF CORP [US]; HINZ WERNER [US]; DEXHEIMER EDWARD MICHAEL [US]) 25 mai 2001 (2001-05-25) * abrégé * * page 3, ligne 35 - ligne 47; figures 1, 2 * * revendication 14 * ----- | 1-15 | |
| Y | NAPHON P ET AL: "A review of flow and heat transfer characteristics in curved tubes" RENEWABLE AND SUSTAINABLE ENERGY REVIEWS, ELSEVIERS SCIENCE, NEW YORK, NY, US LNKD-DOI:10.1016/J.RSER.2004.09.014, vol. 10, no. 5, 1 octobre 2006 (2006-10-01), pages 463-490, XP025173980 ISSN: 1364-0321 [extrait le 2006-10-01] * le document en entier * ----- | 1-15 | DOMAINES TECHNIQUES RECHERCHES (IPC) B01J G01N |
| Y | EP 0 240 340 A2 (VERTECH TREATMENT SYSTEMS INC [US]) 7 octobre 1987 (1987-10-07) * abrégé * * colonne 5, ligne 22 - ligne 43 * ----- | 1-15 | |

-/--

Le présent rapport a été établi pour toutes les revendications

| Lieu de la recherche | Date d'achèvement de la recherche | Examinateur |
|---|---|---|
| Munich | 1 octobre 2010 | Thomasson, Philippe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................................

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 10 30 5767

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 884 443 A1 (INST FRANCAIS DU PETROLE [FR]) 20 octobre 2006 (2006-10-20) <br> * abrégé * <br> * page 7, ligne 25 - page 8, ligne 14; figures 1, 2 * <br> * page 9, ligne 25 - page 10, ligne 4 * <br> ----- | 1-15 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Munich | 1 octobre 2010 | Thomasson, Philippe |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

    .................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 30 5767

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-10-2010

| Document brevet cité au rapport de recherche | | | Date de publication | Membre(s) de la famille de brevet(s) | | | Date de publication |
|---|---|---|---|---|---|---|---|
| WO 2009151322 | A1 | | 17-12-2009 | EP | 2133141 | A1 | 16-12-2009 |
| WO 0136514 | A1 | | 25-05-2001 | AU | 6834400 | A | 30-05-2001 |
| | | | | BR | 0015678 | A | 06-08-2002 |
| | | | | CA | 2391862 | A1 | 25-05-2001 |
| | | | | CN | 1390240 | A | 08-01-2003 |
| | | | | CZ | 20021731 | A3 | 16-10-2002 |
| | | | | EP | 1237984 | A1 | 11-09-2002 |
| | | | | JP | 2003514937 | T | 22-04-2003 |
| | | | | MX | PA02004859 | A | 18-09-2002 |
| | | | | PL | 355565 | A1 | 04-05-2004 |
| | | | | US | 2002147370 | A1 | 10-10-2002 |
| | | | | US | 6410801 | B1 | 25-06-2002 |
| EP 0240340 | A2 | | 07-10-1987 | CA | 1276776 | C | 27-11-1990 |
| | | | | DE | 3781921 | D1 | 05-11-1992 |
| | | | | DE | 3781921 | T2 | 04-03-1993 |
| | | | | ES | 2035045 | T3 | 16-04-1993 |
| | | | | FI | 871446 | A | 04-10-1987 |
| | | | | JP | 7043604 | U | 05-09-1995 |
| | | | | NO | 871315 | A | 05-10-1987 |
| | | | | PT | 84610 | A | 01-05-1987 |
| FR 2884443 | A1 | | 20-10-2006 | US | 2007071664 | A1 | 29-03-2007 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9207226 A

**Littérature non-brevet citée dans la description**

- **ROBERT H PERRY.** Perry's Chemical Engenieers Handbook. 1984, 23-44